# EUROPÄISCHE PATENTANMELDUNG

(11) **EP 2 062 863 A1**
(43) Veröffentlichungstag der Anmeldung: **27.05.2009**
(21) Anmeldenummer: 07121235.1
(22) Anmeldetag: 21.11.2007
(51) Int. Cl.: C04B 28/00, C04B 14/06, C04B 26/16

(54) **Baustein und Verfahren zur Herstellung eines Bausteins**

(71) Anmelder: Luxin (Green Planet) AG, 6004 Luzern (CH)
(72) Erfinder: Burkhardt, Holger, 79761 Waldshut-Tiengen (DE); Glanzmann, Arthur, 6004 Luzern (CH)
(74) Vertreter: Rupp, Christian

(57) **Zusammenfassung**

Die Erfindung betrifft ein Verfahren zur Herstellung eines Baustein, welches die folgenden Stufen umfasst: (i) Vorlegen des Sandes; (ii) Hinzufügen der Kunststoffkomponente als Bindemittel; (iii) Vermischen der Kunststoffkomponente mit dem Sand; (iv) Einbringen der Mischung in eine Form; (v) Verdichten und Verpressen der Mischung unter Formung eines Bausteins; und (vi) Aushärten des Bausteins. Das erfindungsgemäße Verfahren umfasst nicht die Stufe, dass Kalk und/oder Zement als Bindemittel hinzugefügt werden. Außerdem betrifft die Erfindung einen Baustein, der Sand und eine Kunststoffkomponente als Bindemittel umfasst und Kalk und Zement nicht umfasst.

## Beschreibung

### Gebiet der Erfindung

Die Erfindung betrifft ein Verfahren zur Herstellung eines Bausteins. Die Erfindung betrifft weiter einen Baustein, der Sand und eine Kunststoffkomponente umfasst.

### Hintergrund der Erfindung

Aus dem Stand der Technik sind Kalksandsteine bekannt. Kalksandsteine sind künstliche Mauersteine, die aus Calciumoxid (Branntkalk) als Bindemittel und Sand hergestellt werden. Dafür werden Sand und Calciumoxid in einem bestimmten Verhältnis miteinander vermischt und unter Zugabe von Wasser in einen Reaktionsbehälter geleitet. Wenn der Branntkalk zu Kalkydrat umgewandelt ist, wird das Gemisch im Nachmischer auf Pressfeuchte gebracht und anschließend zu Steinrohlingen geformt. Die Steine werden in speziellen Dampfdruckkesseln, den Autoklaven, bei Temperaturen von circa 200°C unter Sattdampfdruck gehärtet. Kalksandsteine werden im Rohbau für Innen- und Außenwände verwendet.

In der DE 30 03 775 C2 ist beispielsweise ein gepresster und dampfgehärteter Kalksandstein mit hohem Weißgrad beschrieben. Weiterhin ist aus der DE 37 01 856 A1 ein Kalksandstein bekannt, bei dem der Frischsand ganz oder teilweise durch Alt- bzw. Abfallsand und/oder Kupolofenschlacke ersetzt ist. Schließlich ist in der DE 201 10 776 U1 ein Schachtstein aus Kalksandstein beschrieben.

Das Verfahren zur Herstellung von Kalksandsteinen hat den Nachteil, dass der Kalk nicht vollständig umgesetzt wird und letztendlich mehr Kalk hinzugegeben werden muss, als eigentlich reagiert. Diese Höherdosierung ist wirtschaftlich unrentabel. Außerdem führen diese unverbrauchten, zum Teil reaktiven Substanzen später zu Ausblühungen bzw. zu anderen unerwünschten Eigenschaften, wie zu einer verschlechterten Frost-Tau-Beständigkeit. Des Weiteren ist, bedingt durch den Freikalkgehalt, eine erhöhte Schwindung der Baustoffe festzustellen, wobei die zulässigen Schwindungsgrenzwerte häufig überschritten werden. Schließlich ist das aus dem Stand der Technik bekannte Verfahren zur Herstellung von Kalksandsteinen mit hohen Energiekosten verbunden. Das Härtungsverfahren wird üblicherweise bei hohen Temperaturen durchgeführt. Dabei werden hohe Emissionswerte (schlechte CO₂-Bilanz) erreicht, die das Verfahren unökologisch machen.

Die Kalksandsteine selbst haben den Nachteil, dass sie sich aufgrund ihrer hohen Dichte nur schlecht zur Wärmedämmung eignen. Nur ein zweischaliger Wandaufbau als Kerndämmung oder ein Wärmedämmverbundsystem kann die Werte erreichen, die laut Wärmeschutzverordnung gefordert werden. Dieser Nachteil wird üblicherweise bei Außenwänden durch eine Zusatzdämmung kompensiert. So werden Kalksandsteinaußenwände in der Regel als mehrschichtige Außenwandkonstruktionen, so genannte Funktionswände, ausgeführt. Eine solche Ausgestaltung ist aber mit zusätzlichen Materialkosten und erhöhtem Arbeitsaufwand verbunden. Außerdem sind Kalksandsteine aufgrund ihrer hohen Dichte zwar schalldämmend aber dafür sehr schwer und somit unhandlich.

### Aufgabe der Erfindung

Es kann daher als Aufgabe der vorliegenden Erfindung angesehen werden, ein Verfahren zur Verfügung zu stellen, mit dem ein Baustein besonders einfach, kosten-, energiesparend und ökologisch hergestellt werden kann.

Es kann weiterhin als Aufgabe angesehen werden, einen Baustein zur Verfügung zu stellen, der bei einem geringen Gewicht und bei einer hohen mechanischen Stabilität sehr gute Wärmedämmeigenschaften aufweist und besonders witterungsbeständig ist.

Die Aufgaben werden mit den Merkmalen der Patentansprüche 1 und 34 gelöst.

### Zusammenfassung der Erfindung

Die Erfindung betrifft ein Verfahren zur Herstellung eines Bausteins, welches die folgenden Stufen umfasst: (i) Vorlegen des Sandes; (ii) Hinzufügen der Kunststoffkomponente als Bindemittel; (iii) Vermischen der Kunststoffkomponente mit dem Sand; (iv) Einbringen der Mischung in eine Form; (v) Verdichten und Verpressen der Mischung unter Formung eines Bausteins; und (vi) Aushärten des Bausteins, wobei die Kunststoffkomponente das Aushärten des Kunststoffs unterstützt. Das erfindungsgemäße Verfahren umfasst nicht die Stufe, dass Kalk und/oder Zement hinzugefügt werden.

Die Unteransprüche 2 bis 33 betreffen bevorzugte Ausführungsformen des erfindungsgemäßen Verfahrens.

Die vorliegende Erfindung betrifft weiterhin einen Baustein, der Sand und eine Kunststoffkomponente als Bindemittel umfasst und Kalk und Zement nicht umfasst.

Die Unteransprüche 35 bis 50 betreffen bevorzugte Ausführungsformen des erfindungsgemäßen Bausteins.

Schließlich betrifft die Erfindung die Verwendung des Bausteins nach mindestens einem der Ansprüche 34 bis 50 als Baukörper, insbesondere als Baukörper zur Wärmedämmung.

### Figuren

Die Erfindung wird im Folgenden, mit Bezug auf einige Ausführungsformen, die in den beigefügten Figuren gezeigt sind, näher beschrieben. Es zeigen:
- Fig. 1:: Ablaufschema eines erfindungsgemäßen Verfahrens zur Herstellung eines Bausteins
- Fig.2:: Grafische Darstellung der einzelnen Verfahrensschritte eines erfindungemäßen Verfahrens zur Herstellung eines typischen Bausteins
- Fig. 3:: Typischer Baustein
- Fig. 4:: Baustein mit Nuten (Vertiefungen) und Federn (Vorsprüngen) über die gesamte Längserstreckung des Bausteins
- Fig. 5:: Baustein mit Nut und Feder über die gesamte Längserstreckung des Bausteins
- Fig. 6:: Baustein mit Nut und Feder über die gesamte Längserstreckung des Bausteins und mit Nut oder Feder an den jeweiligen Stirnseiten des Bausteins

### Detaillierte Beschreibung der Erfindung

Die vorliegende Erfindung betrifft ein Verfahren zur Herstellung eines Bausteins.

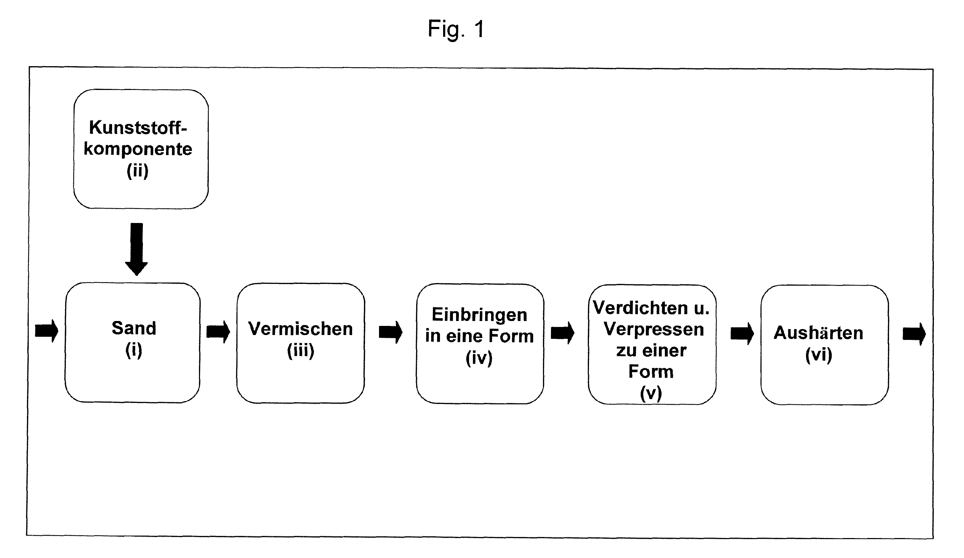

Ein Ablaufsschema eines erfindungsgemäßen Verfahrens ist in Fig. 1 dargestellt. Dabei wird zunächst der Sand vorgelegt (i). Danach wird die Kunststoffkomponente als Bindemittel hinzugefügt (ii). Anschließend wird die Kunststoffkomponente mit dem Sand vermischt (iii) und die Mischung in eine Form gebracht (iv). Nach diesem Schritt wird die Mischung unter Formung eines Bausteins verdichtet und verpresst (v). Schließlich erfolgt das Aushärten des Bausteins (vi), wobei die Kunststoffkomponente das Aushärten unterstützt.

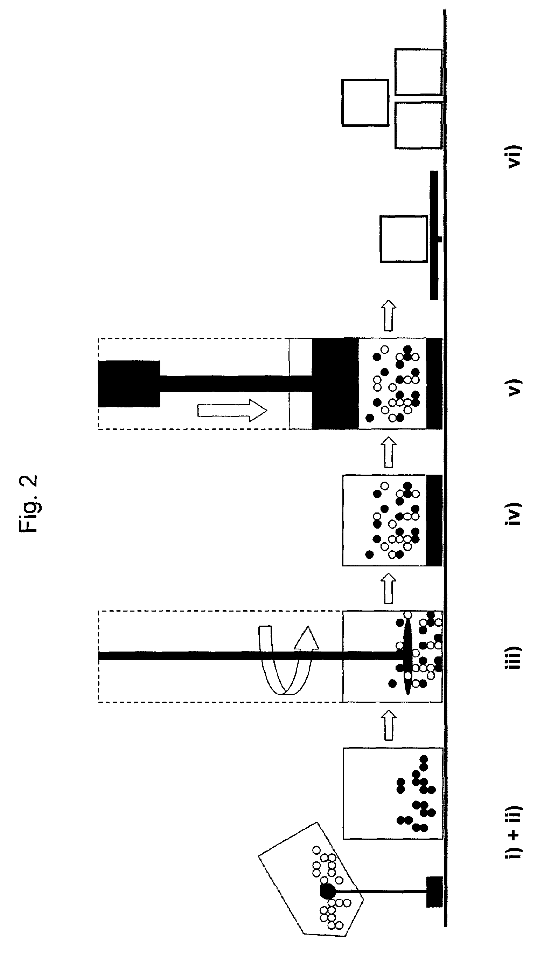

Eine grafische Darstellung der oben beschriebenen Verfahrensschritte (i) bis (vi) eines erfindungemäßen Verfahrens zur Herstellung eines Bausteins ist außerdem in Fig. 2 gezeigt.

Es hat sich überraschenderweise gezeigt, dass mit dem erfindungsgemäßen Verfahren ein Baustein besonders einfach, kosten-, energiesparend und ökologisch hergestellt werden kann.

In dem erfindungsgemäßen Verfahren wird Kunststoff als Bindemittel von Sand eingesetzt. Die Verwendung von Kunststoff als Bindemittel hat den Vorteil, dass er sich leicht verarbeiten lässt, rasch aushärtet und an den Sandpartikeln besonders gut haftet. Aufgrund der eingeschränkten thermischen Beweglichkeit der Molekülketten des Kunststoffs, ist dieser ein schlechter Wärmeleiter. Der stoffliche Aufbau von Kunststoff bewirkt, dass an dessen Oberfläche jene Ionenreaktionen, die zur Korrosion metallischer oder mineralischer Stoffe führen, nicht stattfinden. Außerdem ist Kunststoff im Allgemeinen gegen Pilze und Mikroben resistent. Der mit Kunststoff hergestellte Baustein ist daher besonders fest, beständig und wärmedämmend.

Vorzugsweise wird die Kunststoffkomponente in einer Menge von 5 bis 20 Gew. % zu dem vorgelegten Sand gegeben. Bei dieser Menge wird eine sehr gute Verbindung bzw. Vernetzung der einzelnen Sandkörner miteinander durch die Kunststoffkomponente erreicht. Besonders bevorzugt ist eine Menge von 7 bis 15 Gew. %, die hinzugefügt wird. Am meisten bevorzugt ist eine Menge von 9 bis 12 Gew. %.

Als Kunststoffkomponente kann eine Polyolkomponente oder eine Isocyanatkomponente oder eine abgestimmte Mischung aus diesen beiden Stoffen hinzugefügt werden. Diese Kunststoffkomponenten zeichnen sich durch ihre besonders guten Klebeeigenschaften aus. Außerdem lässt sie sich gleichmäßig unter den Sandkörnern verteilen und sich anschließend gut verpressen. Somit ist eine Aushärtung insbesondere auch unter der Sonne in der Wüste möglich.

Vorteilhaft ist, dass zu der Kunststoffkomponente kein weiteres Bindemittel, wie beispielsweise Kalk und/oder Zement, zur Bindung des Sandes hinzugegeben werden muss. Das führt zu einer deutlichen Reduzierung der Produktions- und Produktkosten. Die Verwendung der Kunststoffkomponente allein ist als Bindemittel völlig ausreichend, um einen mechanisch stabilen und formschönen Baustein zu erhalten, der sich darüber hinaus durch sein geringes Gewicht und durch seine besonders gute Wärmedämmung auszeichnet.

Die Polyolkomponente und die Isocyanatkomponente können in variablen Masseverhältnissen hinzugefügt werden. Vorzugsweise wird die Polyolkomponente und die Isocyanatkomponente in einem Masseverhältnis von 0:100 bis 60:40 hinzugefügt. Besonders bevorzugt ist ein Masseverhältnis von 5:95.

Es hat sich als vorteilhaft erwiesen, ausschließlich natürlich vorkommenden Sand zu verwenden.

Vorzugsweise wird nicht gereinigter oder nach Korngrößen selektierter natürlich vorkommender Sand verwendet. Eine Aufreinigung des Sandes oder eine Selektion nach speziellen Korngrößen ist deshalb nicht unbedingt erforderlich, weil Kunststoff als Bindemittel hinsichtlich der Bandbreite der Körnigkeit des Sands toleranter ist als beispielsweise Kalk als Bindemittel. Wird Kalk zur Bindung von Sandkörnern eingesetzt, so sind gleichmäßige Korngrößen und sehr feinkörniger Sand erforderlich, um ein zufriedenstellendes Bindungsergebnis zu erreichen. Außerdem muss der Sand vor dem Mischen mit Kalk als Bindemittel, z.B. durch Waschen oder Sieben, gereinigt werden.

In dem erfindungsgemäßen Verfahren wird bevorzugt Wüstensand verwendet. Wüstensand besteht hauptsächlich aus Quarz (Siliziumdioxid). Die Verwendung von Wüstensand hat den Vorteil, dass der Sand nicht erst gefördert werden muss. Normalerweise wird Sand aus Gruben gefördert. Je nachdem wo sich der Sand befindet, erfolgt die Sandgewinnung oberhalb des Grundwasserspiegels im Trockenverfahren oder unterhalb des Grundwasserspiegels im Nassgewinnungsverfahren unter Einsatz von geeigneter Abbau- und Fördertechnik. Bei der Verwendung von natürlich vorkommendem Wüstensand, der bekanntlich nicht erst zu Tage befördert werden muss, beschränkt sich die benötigte Abbautechnik daher auf ein Minimum und ist somit besonders kostensparend.

Es kann aber auch verunreinigten Sand verwendet werden. Bei diesem verunreinigten Alt- bzw. Abfallsand handelt es sich beispielsweise um Gießereisand, der in Gießereien bei der Herstellung von Gießformen anfällt. Dieser verunreinigte Sand müsste ansonsten in Deponien als Altlast gelagert werden.

Es hat sich überraschenderweise gezeigt, dass durch die Verwendung von verunreinigtem Sand, die Eigenschaften des fertigen Bausteins nicht beeinträchtigt werden. Es treten weder Risse auf, noch ist die Beständigkeit des Bausteins beeinträchtigt.

Es kann außerdem salzhaltiger Sand verwendet werden. Auch ein mit salzhaltigem Sand hergestellter Baustein ist von hoher Qualität. Das Salz wirkt sich nicht negativ auf die Vernetzung der Kunststoffkomponente mit den einzelnen Sandpartikeln aus. Bei der Herstellung von Betonsteinen oder Kalksandsteinen, bei der Zement bzw. Kalk als Bindemittel verwendet wird, führt die Verwendung von salzhaltigem Sand hingegen zu qualitativen Beeinträchtigungen, wie zum Beispiel Aufblühungen. Dadurch vermindert sich die Qualität des Steins im Hinblick auf seine mechanische Festigkeit und äußere Erscheinung.

Vorzugsweise wird der Sand durch Einsaugen, beispielsweise in einen Behälter, vorgelegt. Dies kann zum Beispiel durch ein Rohrsystem erfolgen, welches mit einer Ansaugpumpe verbunden ist.

Der vorgelegte Sand kann beim Hinzufügen der Kunststoffkomponente aufgewirbelt werden. Dies kann durch eine Misch- oder Rührvorrichtung oder durch das Einblasen von Luft mittels eines Luftgebläses erfolgen. Diese Aufwirbelung hat den Vorteil, dass sich die Kunststoffkomponente besonders gut unter dem Sand verteilt.

Es hat sich als vorteilhaft erwiesen, die Kunststoffkomponente in flüssiger Form dem Sand beizumischen. Dies kann beispielsweise durch Einsprühen erfolgen. Durch das Einsprühen haftet die flüssige Kunststoffkomponente besonders gut an den einzelnen Sandkörnchen. Wird dabei der Sand auch noch aufgewirbelt, kommt es zu einer besonders gleichmäßigen Ummantelung der einzelnen Sandkörnchen durch das eingesprühte Bindemittel. Dadurch wird die Haftung und Vernetzung der Sandkörnchen untereinander erhöht.

Zu dem vorgelegten Sand oder zu der Mischung aus Kunststoffkomponente und Sand kann ein Farbstoff hinzugefügt werden. Hierfür eignet sich ein Farbstoff besonders, wenn er in Pulverform vorliegt.

Vorzugsweise wird der Farbstoff in einer Menge von 0,25 bis 5 Gew. % hinzugefügt. Besonders bevorzugt ist eine Menge von 0,5 bis 3 Gew. %. Am meisten bevorzugt ist eine Menge von 0,5 bis 2 Gew. %. Die Menge variiert dabei je nach gewünschter Farbe der Oberfläche beispielsweise aufgrund des Deckungsgrades der Farbe.

Durch das Hinzufügen eines Farbstoffs können beispielsweise helle Sandarten abgedunkelt oder das äußere Erscheinungsbild des Steins verändert werden. Als Farbstoff sind alle gängigen Farbmittel denkbar, die in der Baustoffindustrie zum Färben von Baumaterialien Verwendung finden. Sowohl anorganische Farbstoffe als auch organische Farbstoffe können zum Färben des erfindungsgemäßen Bausteins eingesetzt werden. Als natürliche, organische Farbstoffe können beispielsweise Indigo oder Purpur zum Einsatz kommen. Vorzugsweise wird als Farbstoff ein anorganisches Pigment verwendet. Als anorganisches Pigment kommt beispielsweise Zinkweiß, Titanweiß, Ocker, Chromgelb oder Pflanzenschwarz oder eine Mischung daraus in Frage.

Das erfindungsgemäße Verfahren wird ohne Wasserzuschlag durchgeführt. Wasser, wie beispielsweise Kalkgrundwasser, ist nicht erforderlich, um die Verklebung der Sandkörnchen untereinander zu unterstützen oder die Verteilung des Kunststoffbindemittels unter dem Sand zu verbessern.

Durch den fehlenden Wasserzuschlag unterscheidet sich das erfindungsgemäße Verfahren von dem Verfahren zur Herstellung von Kalksandsteinen als Baustein. Kalksandsteine werden als künstliche Bausteine aus Branntkalk (Calciumoxid), Sand und Wasser hergestellt. Erst die Zugabe von Wasser bewirkt, dass der Branntkalk zu Kalkhydrat umgewandelt wird und nach dem Pressen ein stabiler Baukörper entsteht.

Das Vermischen der Kunststoffkomponente mit dem Sand und optional mit dem Farbstoff kann in einem Mischer oder mit Hilfe eines geeigneten Rührgeräts erfolgen.

Nach dem Vermischen der einzelnen Komponenten zu einem homogenen Gemisch wird dieses in eine Form überführt. Neben der Mischung kann noch mindestens ein Bauteil in die Form eingebracht werden. Dieses Bauteil kann ein Befestigungs- oder ein Stabilisierungselement sein. Vorzugsweise wird als Stabilisierungselement eine Armierung, Bewehrung (z.B. Stahleinlage) oder eine Gitterstruktur (z.B. Stahlgitter) zusammen mit der Mischung in eine Form eingebracht und anschließend mit eingepresst. Durch das Einbringen einer Gitterstruktur, Armierung oder Bewehrung wird eine zusätzliche Verstärkung des erfindungsgemäßen Bausteins erreicht. Ein so gefertigter Baustein besitzt eine höhere Druck- und Zugfestigkeit. Dies ist insbesondere bei der Verwendung des erfindungsgemäßen Bausteins als tragendes Element von Bedeutung.

Der erfindungsgemäße Baustein, der durch ein zusätzliches Bauteil stabilisiert wurde, ist auch gegenüber Umwelteinflüssen (z.B. Wasser, Frost, chemische Stoffe) besser geschützt und daher noch länger haltbar. Durch den Kunststoffzuschlag wird zudem das eingelegte Bauteil, z.B. Metallgeflecht, nach außen hin abgedichtet, wodurch sich dessen Korrosionsgefahr verringert. Somit ließe sich ein derartiger Baustein auch als Deckenbauteil verwenden.

Als Befestigungselement kann ein Hacken, ein Winkel oder eine Öse verwendet werden. Das Befestigungselement wird zusammen mit der Mischung aus Kunststoffbindemittel und Sand und optional einem Farbstoff in eine Form eingebracht und anschließend mit eingepresst. Auf diese Weise wird ein fertiger Baustein erhalten, der aufgrund seiner Verankerungs- und Befestigungsmöglichkeit beispielsweise im Fassadenbau seine Verwendung findet.

Vorzugsweise wird eine an die gewünschte Bausteingröße, Geometrie und Bausteinmenge angepasste Form eingesetzt. So kann beispielsweise eine viereckige Form für die Herstellung von viereckigen Bausteinen und eine rechteckige Form zur Herstellung von rechteckigen Bausteinen verwendet werden. Die Geometrie der Form kann auch derart sein, dass Bausteine erhalten werden, die wenigstens eine oder auch mehrere Nuten und/oder Federn besitzen.

Darüber hinaus können mit dem erfindungsgemäßen Verfahren Winkelsteine hergestellt werden. Auch ist die Herstellung von Dachziegeln möglich. Diese sind härter und bruchfester als herkömmlich gebrannte Dachziegel.

Es kann eine Einfachpressform verwendet werden. Besonders vorteilhaft ist es aber, eine Mehrfachpressform einzusetzen. Eine solche Mehrfachpressform kann beispielsweise eine Größe von 1,5 x 2,2 m aufweisen. Mit dieser Form können ca. 80 Bausteine der Größe von 25 cm x 12,5 cm zeitgleich hergestellt werden.

Das Verdichten und Verpressen kann hydraulisch, beispielsweise mit einer Hochdruckpresse, erfolgen. Das Pressen ist dabei derart auszuführen, dass ein guter Kompromiss zwischen der mechanischen Stabilität des erfindungsgemäßen Bausteins und der Wärmedämmung erreicht wird. Allgemein gilt, dass sich mit größer werdendem Pressdruck, die Porosität des Bausteins verringert und sich dadurch dessen Isolierung verschlechtert. Der Pressdruck ist also immer so zu wählen, dass ein Baustein hergestellt wird, der sich sowohl durch seine mechanische Stabilität, im Hinblick auf seine Druckfestigkeit, Bruchfestigkeit und Dehnbarkeit, als auch durch seine besonders gute Wärmedämmung auszeichnet.

Für das Pressen eines 25 cm x 12,5 cm großen Bausteins wird vorzugsweise ein hydraulischer Pressdruck von 50 bis 200 kg/cm² aufgebracht. Bei diesem Pressdruck wird ein Baustein mit sehr guter mechanischer Stabilität und Isolierung erhalten. Besonders bevorzugt ist ein Pressdruck von 20 bis 100 kg/cm². Am meisten bevorzugt ist ein Pressdruck von 10 bis 50 kg/cm².

Bei der Wahl des Pressdrucks ist außerdem der Kunststoffzuschlag zu berücksichtigen. Grundsätzlich gilt, dass bei Erhöhung des Kunststoffzuschlags der Pressdruck zu verringern ist, wenn ein Baustein mit guter Wärmedämmung und Isolierung erhalten werden soll.

Darüber hinaus ist die Wahl des Pressdrucks von der Größe der Sandkörner abhängig zu machen. Bei der Verwendung von feinkörnigem Sand ist bereits ein geringer Pressdruck ausreichend.

Im Gegensatz zu anderen Verfahren des Stands der Technik können mit dem erfindungsgemäßen Verfahren auch Bausteine aus besonders feinen Sanden hergestellt werden. Feinkörnige Sande eignen sich beispielsweise nicht zur Herstellung von Kalksandsteinen.

Durch die Verwendung einer Kunststoffkomponente als Bindemittel ergibt sich nach dem Pressen eine Oberfläche, die sehr ansehnlich ist und unverputzt im Bau verwendet werden kann. Die Verbindung zwischen dem Kunststoffbindemittel und den Sandpartikeln ist so abriebfest, dass einzelne Sandpartikel nicht mehr einfach von der Oberfläche entfernt bzw. abgekratzt werden können.

Nach dem Pressen wird der Baustein aus der Pressform entfernt. Danach muss er aushärten. Vorzugsweise härtet der Baustein bei Temperaturen zwischen 60 und 110 °C aus. Besonders bevorzugt ist ein Temperaturbereich von 70 bis 90°C. Am meisten bevorzugt härtet der Baustein bei einer Temperatur von 80 °C aus.

Der erfindungsgemäße Baustein kann an der Luft aushärten. Dies kann beispielsweise unter den natürlichen Umweltbedingungen der Wüste, die durch die dort vorherrschende Lufttemperatur und Luftfeuchtigkeit bestimmt werden, erfolgen. In der Wüste liegen die Temperaturen zwischen 60 und 80°C. In Bodennähe können aber auch höhere Temperaturen von bis zu 110°C erreicht werden. Es ist überdies auch denkbar, den Baustein in Hitzeschränken oder Wärmeöfen mit geringem Energieaufwand auszuhärten.

Das Aushärten unter natürlichen Umweltbedingungen ist besonders energiesparend und ökologisch. Durch das langsame Aushärten wird außerdem ein qualitativ hochwertiger Baustein erhalten. Der Anteil an Ausschuss, beispielsweise durch Trocknungsrisse, ist bei der Trocknung unter natürlichen Bedingungen geringer oder auch ganz auszuschließen. Auf diese Weise wird ein Baumaterial erhalten, welches vollkommen neutral und ohne Rückstände aushärtet.

Das Aushärten des erfindungsgemäßen Bausteins unter natürlichen Umgebungsbedingungen wird auch durch die Farbe des Sandes beeinflusst. Dunklere Sande können stärker Wärme aufnehmen als hellere Sande. Somit härten Bausteine, die dunklere Sandarten umfassen schneller aus als Bausteine mit helleren Sanden. Gegebenenfalls können hellere Sandarten durch Farbzuschlag abgedunkelt werden, um eine schnellere Aushärtung des erfindungsgemäßen Bausteins zu erzielen.

Vorzugsweise findet das Aushärten innerhalb von 24 Stunden statt, besonders vorzugsweise innerhalb von 12 Stunden.

Es hat sich als besonders vorteilhaft erwiesen, dass erfindungsgemäße Verfahren direkt am Ort des Sandvorkommens durchzuführen. Dies wird insbesondere aufgrund der einfachen Anpassung des Verfahrens an die lokalen Anforderungen vereinfacht und spart Transport-und Energiekosten. Der erfindungsgemäße Baustein kann zum Beispiel direkt in der Wüste hergestellt werden. Dies kann mobil oder stationär erfolgen. Beispielsweise kann das Verfahren auf einem extra dafür ausgestatteten LKW stattfinden. Die Herstellung des erfindungsgemäßen Bausteins kann bei vorzugsweise langsamer Fahrt oder bei Stillstand des Fahrzeugs erfolgen. Der LKW kann für die Durchführung des erfindungsgemäßen Verfahrens beispielsweise mit einer Ansaugpumpe, ausgestattet sein, die das Ansaugen des Wüstensands in eine Mischvorrichtung ermöglicht. In diese Mischvorrichtung kann dann der Wüstensand mit einer Kunststoffkomponente angereichert werden. Das Hinzufügen der Kunststoffkomponente zu dem vorgelegten Sand kann zum Beispiel mit einer Einsprühvorrichtung erfolgen, die die Kunststoffkomponente in der Mischvorrichtung fein verteilt. Beim Einsprühen des Bindemittels kann der Sand zusätzlich aufgewirbelt werden, um die Benetzung des Sands durch das Bindemittel zu verbessern. Dies kann beispielsweise durch ein Rührgerät erfolgen. Dass nach dem Vermischen entstandene homogene Gemisch kann anschließend in eine Einfach- oder Mehrfachpressform überführt und hydraulisch gepresst werden. Danach kann der gepresste Baustein zum Beispiel über ein Förderband hinter dem Fahrzeug auf den Wüstenboden abgelegt werden, wo er schließlich innerhalb von 24 Stunden bei 60 bis 110 °C in Bodennähe aushärtet. Der fertige Baustein kann dann direkt vor Ort seiner Verwendung zugeführt werden.

Die Erfindung betrifft weiterhin einen Baustein, der Sand und eine Kunststoffkomponente als Bindemittel umfasst und Kalk und Zement als Bindemittel nicht umfasst.

Es hat sich überraschenderweise herausgestellt, dass mit dem erfindungsgemäßen Baustein, ein Baumaterial erhalten werden kann, welches sich einerseits durch sein geringes Gewicht und andererseits durch seine besonders hohe mechanische Festigkeit (z.B. Druckfestigkeit, und Biegezugfestigkeit) auszeichnet. Darüber hinaus weißt der Baustein ausgezeichnete Wärmedämmeigenschaften auf.

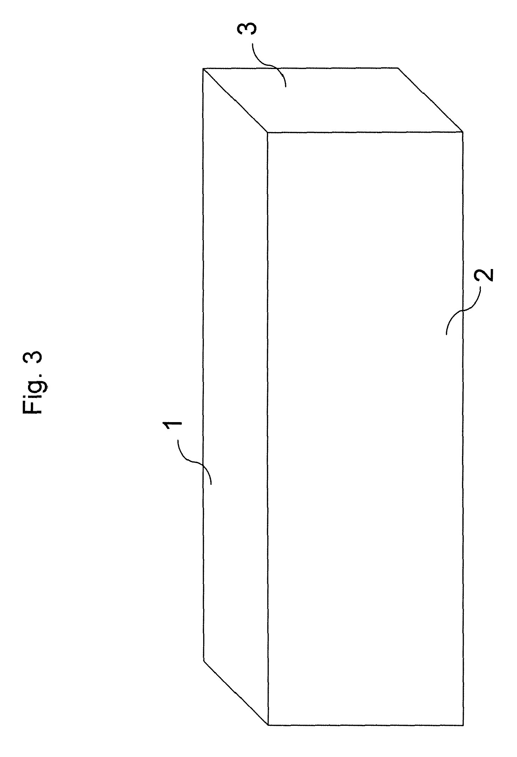

Die Fig. 3 zeigt in perspektivischer Darstellung einen erfindungsgemäßen Baustein. Er ist im Ausführungsbeispiel quaderförmig ausgebildet, kann aber auch jede andere geeignete Form haben. Der erfindungsgemäße Baustein hat im Ausführungsbeispiel rechtwinklig zueinander liegende Seitenflächen, von denen in der Fig. 3 die Seiten 1 bis 3 dargestellt sind.

Der erfindungsgemäße Baustein dieses Ausführungsbeispiels lässt sich problemlos zu einer Bausteinwand verbauen. Hierfür werden mindestens zwei derartig ausgebildete Bausteine an ihren Kontaktflächen mit einem Kunststoffkleber versehen, wodurch die Bausteine an diesen Flächen formschlüssig miteinander verbunden werden. Als Kunststoffkleber kann vorzugsweise ein Polyurethankleber, aber auch andere Kleber verwendet werden.

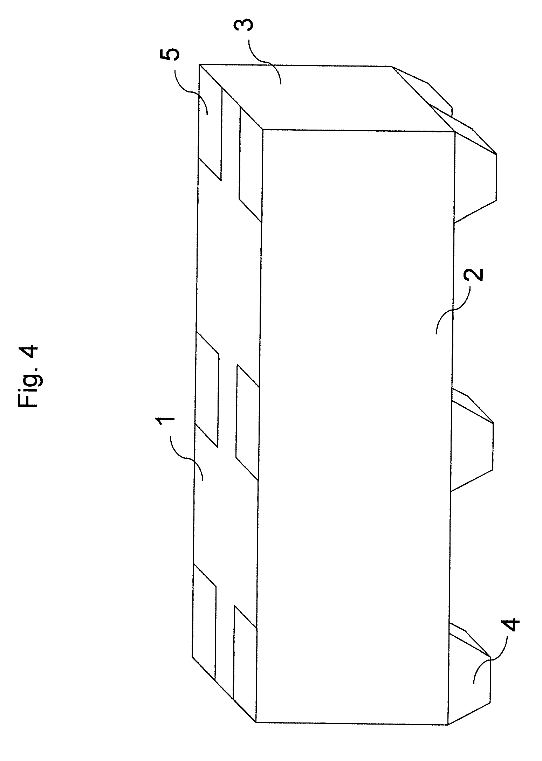

Fig. 4 zeigt einen erfindungsgemäßen Baustein mit den Seitenflächen 1 bis 3, der zusätzlich Federn (Vorsprünge) 4 und Nuten (Vertiefungen) 5 aufweist, wobei sich die Federn 4 in die Nuten 5 eines anderen erfindungsgemäßen Bausteins passgenau einstecken lassen.

Somit lässt sich der erfindungsgemäße Baustein dieses Ausführungsbeispiels hervorragend im Trockenbauverfahren einsetzen. Durch die Nuten und Federn wird an den Kontaktstellen zwischen gleichartig ausgebildeten Bausteinen eine luftdichte Verbindung erreicht. Außerdem wird die gerade Positionierung der entstehenden Bausteinwand garantiert.

Vorzugsweise erstrecken sich Nut und/oder Feder über die gesamte Längserstreckung des erfindungsgemäßen Bausteins, um somit über die gesamte Längserstreckung beim Aufeinandersetzen eine besonders stabile Verbindung zu schaffen.

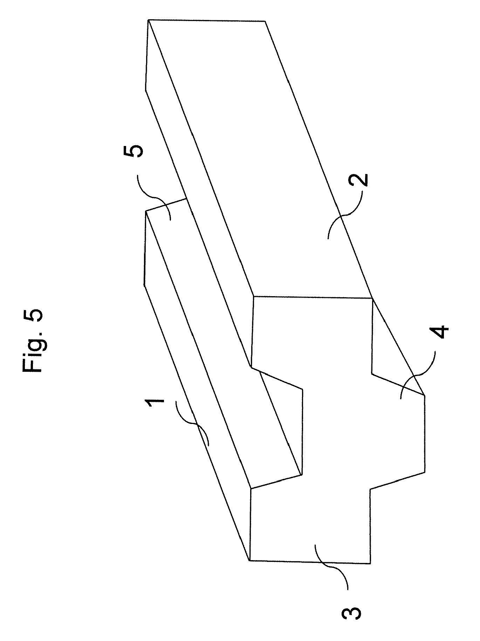

Ein derartiger Baustein ist in Fig. 5 abgebildet. In diesem Ausführungsbeispiel weißt der erfindungsgemäße Baustein mit den Seitenflächen 1 bis 3 auf der Oberseite eine Nut 5 und auf der Unterseite eine Feder 4 auf. Dabei erstrecken sich die Nut 5 und die Feder 4 über die gesamte Länge des erfindungsgemäßen Bausteins.

Besonders bevorzugt ist ein erfindungsgemäßer Baustein, der nicht nur an den Längsseiten eine Nut und/oder eine Feder aufweist, sondern auch an den Stirnseiten.

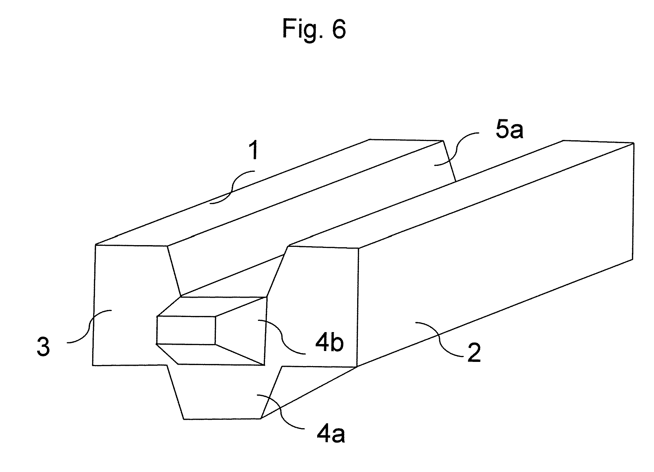

In Fig. 6 ist ein solcher Baustein dargestellt. Der erfindungsgemäße Baustein mit den Seitenflächen 1 bis 3 hat in diesem Ausführungsbeispiel neben der Nut 5a auf der Oberseite und der Feder 4a auf der Unterseite auch an den Stirnseiten jeweils eine Nut und eine Feder. In der Fig. 6 ist nur die Feder 4b an der vorderen Stirnseite erkennbar. Die Nut 5b ist verdeckt und befindet sich auf der gegenüberliegenden Stirnseite des Bausteins.

Besonders vorteilhaft ist, dass sich durch das Trockenbauverfahren die Baukosten reduzieren lassen, da Baumaterialien zum Vermauern oder Verkleben nicht zum Einsatz kommen. Außerdem wird durch das Trockenbauverfahren die Baufeuchte des Mauerwerks reduziert, was dessen Haltbarkeit und Beständigkeit erhöht.

Die Lagerfugen zwischen den erfindungsgemäßen Bausteinen können natürlich auch noch zusätzlich verfugt oder verklebt werden. Dies bietet sich beispielsweise dann an, wenn in Erdbeben gefährdeten Gebieten gebaut wird und das Mauerwerks außerordentlich stabil sein soll. Die hierfür einzusetzenden Mengen an Kleber sind aber deutlich geringer als bei einem reinen Nassbauverfahren.

Vorzugsweise umfasst der erfindungemäße Baustein 5 bis 20 Gew. % einer Kunststoffkomponente als Bindemittel. Ein derartiger Baustein zeichnet sich durch seine besondere Härte, Bruchfestigkeit und chemische Beständigkeit aus. Außerdem ist der erfindungsgemäße Baustein der Kunststoff als Bindemittel umfasst sehr leicht im Vergleich zu einem Baustein gleicher Größe, der beispielsweise Zement oder Kalk als Bindemittel enthält.

Besonders bevorzugt ist ein Baustein, der 7 bis 15 Gew. % einer Kunststoffkomponente umfasst. Am meisten bevorzugt ist ein Baustein, der 9 bis 12 Gew. % einer Kunststoffkomponente umfasst.

Vorzugsweise ist die Kunststoffkomponente eine Mischung aus einer Polyolkomponente und/oder einer Isocyanatkomponente. Diese Kunststoffkomponenten verfügen über besonders gute Klebeeigenschaften. Ferner ist die einfache und unproblematische Verarbeitung und restlose Umwandlung nach erfolgter Aushärtung in ein vollkommen ungiftiges, inertes Produkt möglich.

Vorteilhaft ist, dass der erfindungemäße Baustein außer der Kunststoffkomponente kein weiteres Bindemittel umfasst, wie beispielsweise Kalk und Zement. Er ist daher sehr günstig in seiner Herstellung. Die Kunststoffkomponente allein führt zur Bildung eines besonders stabilen Bausteins, der sich außerdem durch seine besonders gute Wärmedämmung auszeichnet. Aufblühungen, wie sie bei Kalksandsteinen vorkommen können, treten nicht auf.

Der erfindungsgemäße Baustein kann die Polyolkomponente und die Isocyanatkomponente in variablen Masseverhältnissen umfassen. Vorzugsweise liegt das Masseverhältnis der Polyolkomponente zu der Isocyanatkomponente im Bereich von 0:100 bis 60:40. Besonders bevorzugt beträgt das Masseverhältnis der Polyolkomponente zu der Isocyanatkomponente 5:95.

In einer bevorzugten Ausführungsform besteht der Baustein aus natürlich vorgefundenem Sand.

Unter natürlich vorkommendem Sand ist ein unverfestigtes Sedimentgestein mit einer Korngröße von 0,063 bis 2 mm zu verstehen. Sand gilt als Grobsand, wenn er eine Korngröße von 0,63 bis 2 mm aufweist. Sand der Korngröße von 0,2 bis 0,63 mm wird als Mittelsand bezeichnet und Sand der Korngröße von 0,063 bis 0,2 mm als Feinsand.

Die hohen Qualitätsansprüche an das fertig gestellte Bauprodukt setzen üblicherweise voraus, dass nur bestimmte Sandqualitäten als Ausgangsstoff eingesetzt werden können. Dafür wird der Sand in der Regel durch Siebverfahren vorklassifiziert. Anschließend wird der Sand in Chargen mit bestimmten Korngrößenverhältnissen aufgeteilt. Erst dann wird der Sand verarbeitet.

Es hat sich überraschender Weise herausgestellt, dass der erfindungsgemäße Baustein Sand in allen Körnergrößen umfassen kann, ohne dass es zu Qualitätseinbußen kommt.

Die mineralische Zusammensetzung von Sand kann ja nach Ort des Sandvorkommens variieren. Vorzugsweise umfasst der erfindungsgemäße Baustein Quarzsand (Siliziumdioxid), z.B. Sand aus Wüstenregionen. Dieser Sand ist aufgrund seiner Härte und seiner chemischen Beständigkeit besonders verwitterungsbeständig. Der erfindungsgemäße Baustein kann aber auch andere Sandarten umfassen, wie beispielsweise den Sand vom Strand von Koralleninseln. Dieser Sand besteht aus zermahlenen Korallenskeletten und damit überwiegend aus Calciumcarbonat. Außerdem kann der erfindungsgemäße Baustein schwarzen Sand umfassen, der aus verwittertem Basalt besteht. In Frage kommt auch Vulkansand, der entweder aus Lava entstand, die durch die Kraft fließenden Wassers oder durch den Wellenschlag am Ufer größerer Gewässer erodiert wurde oder der sich in Form von vulkanischer Asche unmittelbar bei Vulkanausbrüchen bildete.

Der erfindungsgemäße Baustein kann außerdem einen Farbstoff umfassen. Vorzugsweise umfasst der erfindungsgemäße Baustein einen Farbstoff in einer Menge von 0,25 bis 5 Gew. %. Besonders bevorzugt ist eine Menge von 0,5 bis 3 Gew. % und am meisten bevorzugt eine Menge von 0,5 bis 2 Gew. %.

Durch den Farbstoff kann die natürliche Farbe des Bausteins abgedunkelt oder das äußere Erscheinungsbild des Bausteins verändert werden. Der Farbstoff kann ein anorganischen oder ein organischen Farbstoff sein. Als natürlicher, organischer Farbstoff kommt beispielsweise Indigo oder Purpur in Frage. Vorzugsweise umfasst der erfindungsgemäße Baustein als Farbstoff ein anorganisches Pigment, wie beispielsweise Zinkweiß, Titanweiß, Ocker, Chromgelb oder Pflanzenschwarz oder eine Mischung daraus.

Der erfindungsgemäße Baustein ist im Wesentlichen glatt, so dass er unverputzt verwendet werden kann.

In einer besonderen Ausführungsform umfasst der erfindungsgemäße Baustein weiterhin mindestens ein Bauteil. Dieses Bauteil kann beispielsweise ein Befestigungs- oder ein Stabilisierungselement sein.

Vorzugsweise umfasst der erfindungsgemäße Baustein als Stabilisierungselement eine Armierung, Bewehrung (z.B. Stahleinlage) oder eine Gitterstruktur (z.B. Stahlgitter). Durch ein solches Bauteil wird eine zusätzliche Verstärkung des Bausteins erreicht. Ein solcher Baustein besitzt eine höhere Druck- und Zugfestigkeit. Dies ist insbesondere bei der Verwendung des erfindungsgemäßen Bausteins als tragendes Element von Bedeutung.

Bevorzugt umfasst der erfindungsgemäße Baustein als Befestigungselement einen Hacken, einen Winkel oder eine Öse. Diese Elemente ermöglichen die bessere Verankerungs-und Befestigungsmöglichkeit des erfindungsgemäßen Bausteins, der beispielsweise im Fassadenbau Verwendung findet.

Der erfindungsgemäße Baustein kann als Baukörper für den Innen- und Außenbau verwendet werden. Durch seine Zusammensetzung eignet er sich besonders gut zur Wärmedämmung. Durch sein geringes Gewicht und durch seine hohe Festigkeit lässt er sich leicht transportieren und verarbeiten.

Die Erfindung wird anhand der folgenden Beispiele, allerdings ohne Einschränkung darauf, veranschaulicht.

### Beispiel 1:

Ein erfindungsgemäßer Baustein wurde wie folgt hergestellt: Zunächst wurden 87,5 Gew. % Sand in einem Mischbehälter vorgelegt. Dazu wurden 0,5 Gew. % Chromgelb gegeben. Anschließend wurden 12 Gew. % einer Mischung aus einer Polyolkomponente und einer Isocyanatkomponente in einem Masseverhältnis von 3:97 in flüssiger Form hinzugefügt. Die einzelnen Komponenten wurde dann mit einem Rührmischer miteinander vermischt und die Mischung anschließend in eine Einfachpressform der Größe von 10 cm x 10 cm gefüllt. Diese Mischung wurde dann bei einem hydraulischen Pressdruck von 20 kg/cm² verdichtet und verfestigt. Der Baustein wurde anschließend aus der Einfachpressform entfernt. Er härtete bei 80 °C für 24 Stunden aus. Der gefertigte Baustein zeichnet sich durch eine sehr gute mechanischer Stabilität und Isolierung aus.

### Beispiel 2:

Zur Herstellung von erfindungsgemäßen Bausteinen wurde wie folgt vorgegangen: Zunächst wurden 90 Gew. % Sand in einem Mischbehälter vorgelegt. Dazu wurden 1 Gew. % Titanweiß gegeben. Anschließend wurden 9 Gew. % einer Mischung aus einer Polyolkomponente und einer Isocyanatkomponente in einem Masseverhältnis von 5:95 in flüssiger Form hinzugefügt. Die einzelnen Bestandteile wurden dann mit einem Rührmischer vermischt und die Mischung anschließend in eine Mehrfachpressform gefüllt. Diese Mischung wurde dann bei einem hydraulischen Pressdruck von 20 kg/cm² verdichtet und verfestigt. Die Bausteine wurden anschließend aus der Pressform entfernt. Sie härteten bei Temperaturen von 80 °C für 24 Stunden aus. Die Bausteine wurden anschließend direkt ihrer Verwendung zugeführt.

Die Erfindung ist nicht auf Bausteine und deren Herstellung beschränkt. Es ist beispielsweise auch denkbar, Dachpfannen oder Dachziegel mit diesem Verfahren herzustellen, die die gleichen Eigenschaften aufweisen, wie die beschriebenen Bausteine.

## Patentansprüche

1. Verfahren zur Herstellung eines Bausteins, umfassend die folgenden Stufen:
(i) Vorlegen des Sandes;
(ii) Hinzufügen einer Kunststoffkomponente als Bindemittel;
(iii) Vermischen der Kunststoffkomponente mit dem Sand;
(iv) Einbringen der Mischung in eine Form;
(v) Verdichten und Verpressen der Mischung unter Formung eines Bausteins; und
(vi) Aushärten des Bausteins,
wobei die Kunststoffkomponente das Aushärten des Bausteins unterstützt; und
wobei kein Kalk und kein Zement hinzugefügt werden.

2. Verfahren nach Anspruch 1 **dadurch gekennzeichnet,**
**dass** die Kunststoffkomponente in einer Menge von 5 bis 20 Gew.% hinzugefügt wird.

3. Verfahren nach Anspruch 2 **dadurch gekennzeichnet,**
**dass** die Kunststoffkomponente in einer Menge von 7 bis 15 Gew.% hinzugefügt wird.

4. Verfahren nach Anspruch 3 **dadurch gekennzeichnet,**
**dass** die Kunststoffkomponente in einer Menge von 9 bis 12 Gew.% hinzugefügt wird.

5. Verfahren nach mindestens einem der Ansprüche 1 bis 4,
**dadurch gekennzeichnet,**
**dass** als Kunststoffkomponente eine Mischung aus einer Polyolkomponente und/oder einer Isocyanatkomponente hinzugefügt wird.

6. Verfahren nach mindestens einem der Ansprüche 1 bis 5,
**dadurch gekennzeichnet,**
**dass** die Polyolkomponente und die Isocyanatkomponente in variablen Masseverhältnissen hinzugefügt werden.

7. Verfahren nach mindestens einem der Ansprüche 1 bis 6,
dass die Polyolkomponente und die Isocyanatkomponente in einem Masseverhältnis von 0:100 bis 60:40 hinzugefügt werden.

8. Verfahren nach Anspruch 7, **dadurch gekennzeichnet,**
**dass** die Polyolkomponente und die Isocyanatkomponente in einem Masseverhältnis von 5:95 hinzugefügt werden.

9. Verfahren nach mindestens einem der Ansprüche 1 bis 8,
**dadurch gekennzeichnet,**
**dass** nur natürlich vorgefundener Sand verwendet wird.

10. Verfahren nach Anspruch 9, **dadurch gekennzeichnet,**
**dass** der natürlich vorgefundene Sand vor der Verwendung nicht gereinigt wird.

11. Verfahren nach Anspruch 9, **dadurch gekennzeichnet,**
**dass** der natürlich vorgefundene Sand vor der Verwendung nicht nach Korngrößen selektiert wird.

12. Verfahren nach mindestens einem der vorangegangen Ansprüche 1 bis 11, **dadurch gekennzeichnet,**
**dass** Wüstensand verwendet wird.

13. Verfahren nach mindestens einem der vorangegangenen Ansprüche 1 bis 12, **dadurch gekennzeichnet,**
**dass** der Sand durch Einsaugen vorgelegt wird.

14. Verfahren nach mindestens einem der vorangegangenen Ansprüche 1 bis 13, **dadurch gekennzeichnet,**
**dass** der vorgelegte Sand beim Hinzufügen der Kunststoffkomponente aufgewirbelt wird.

15. Verfahren nach mindestens einem der vorangegangenen Ansprüche 1 bis 14, **dadurch gekennzeichnet,**
**dass** eine flüssige Kunststoffkomponente hinzugefügt wird.

16. Verfahren nach Anspruch 15, **dadurch gekennzeichnet,**
**dass** die flüssige Kunststoffkomponente durch Einsprühen hinzugefügt wird.

17. Verfahren nach mindestens einem der Ansprüche 1 bis 16, **dadurch gekennzeichnet,**
**dass** zu dem vorgelegten Sand oder zu der Mischung aus Kunststoffkomponente und Sand ein Farbstoff hinzugefügt wird.

18. Verfahren nach Anspruch 17, **dadurch gekennzeichnet,**
**dass** als Farbstoff ein anorganisches Pigment hinzugefügt wird.

19. Verfahren nach Anspruch 18, **dadurch gekennzeichnet,**
**dass** als anorganisches Pigment Zinkweiß, Titanweiß, Ocker, Chromgelb oder Pflanzenschwarz oder eine Mischung daraus hinzugefügt wird.

20. Verfahren nach mindestens einem der Ansprüche 1 bis 19, **dadurch gekennzeichnet,**
**dass** die Mischung und noch mindestens ein Bauteil in die Form eingebracht wird.

21. Verfahren nach Anspruch 20, **dadurch gekennzeichnet,**
**dass** das Bauteil ein Befestigungs- oder ein Stabilisierungselement ist.

22. Verfahren nach Anspruch 21, **dadurch gekennzeichnet,**
**dass** das Befestigungselement ein Haken, ein Winkel oder eine Öse und das Stabilisierungselement eine Armierung, eine Bewehrung oder eine Gitterstruktur ist.

23. Verfahren nach mindestens einem der Ansprüche 1 bis 22, **dadurch gekennzeichnet,**
**dass** kein Wasserzuschlag erforderlich ist.

24. Verfahren nach mindestens einem der Ansprüche 1 bis 23, **dadurch gekennzeichnet,**
**dass** eine an die gewünschte Bausteingröße, Geometrie und Bausteinmenge angepasste Form verwendet wird.

25. Verfahren nach mindestens einem der Ansprüche 1 bis 24, **dadurch gekennzeichnet,**
**dass** eine Einfachpressform verwendet wird.

26. Verfahren nach mindestens einem der Ansprüche 1 bis 25, **dadurch gekennzeichnet,**
**dass** eine Mehrfachpressform verwendet wird.

27. Verfahren nach mindestens einem der Ansprüche 1 bis 26, **dadurch gekennzeichnet,**
**dass** das Verdichten und Verpressen hydraulisch erfolgt.

28. Verfahren nach mindestens einem der Ansprüche 1 bis 27, **dadurch gekennzeichnet,**
**dass** der Baustein bei Temperaturen zwischen 60°C bis 110°C aushärtet.

29. Verfahren nach Anspruch 28, **dadurch gekennzeichnet,**
**dass** der Baustein bei Temperaturen zwischen 70°C und 90°C aushärtet.

30. Verfahren nach Anspruch 29, **dadurch gekennzeichnet,**
**dass** der Baustein bei einer Temperatur von 80°C aushärtet.

31. Verfahren nach mindestens einem der Ansprüche 1 bis 30, **dadurch gekennzeichnet,**
**dass** der Baustein unter den natürlichen Umweltbedingungen der Wüste aushärtet.

32. Verfahren nach Anspruch 31, **dadurch gekennzeichnet,**
**dass** die natürlichen Umweltbedingungen der Wüste durch die dort vorherrschende Lufttemperatur und Luftfeuchtigkeit bestimmt werden.

33. Verfahren nach mindestens einem der Ansprüche 1 bis 32, **dadurch gekennzeichnet,**
**dass** das Aushärten innerhalb von 24 Stunden erfolgt.

34. Baustein, **dadurch gekennzeichnet,**
**dass** er Sand und eine Kunststoffkomponente als Bindemittel umfasst und Kalk und Zement nicht umfasst.

35. Baustein nach Anspruch 34, **dadurch gekennzeichnet,**
**dass** er 5 bis 20 Gew.% einer Kunststoffkomponente umfasst.

36. Baustein nach Anspruch 35, **dadurch gekennzeichnet,**
**dass** er 7 bis 15 Gew.% einer Kunststoffkomponente umfasst.

37. Baustein nach Anspruch 36, **dadurch gekennzeichnet,**
**dass** er 9 bis 12 Gew.% einer Kunststoffkomponente umfasst.

38. Baustein nach mindestens einem der Ansprüche 34 bis 37, **dadurch gekennzeichnet,**
**dass** die Kunststoffkomponente eine Mischung aus einer Polyolkomponente und/oder einer Isocyanatkomponente ist.

39. Baustein nach mindestens einem der Ansprüche 34 bis 38, **dadurch gekennzeichnet,**
**dass** das Massenverhältnis der Polyolkomponente zu der Isocyanatkomponente variabel ist.

40. Baustein einem der Ansprüche 34 bis 39, **dadurch gekennzeichnet,**
**dass** das Massenverhältnis der Polyolkomponente zu der Isocyanatkomponente im Bereich von 0:100 bis 60:40 liegt.

41. Baustein nach Anspruch 40, **dadurch gekennzeichnet,**
**dass** das Massenverhältnis der Polyolkomponente zu der Isocyanatkomponente 5:95 beträgt.

42. Baustein nach mindestens einem der Ansprüche 34 bis 41, **dadurch gekennzeichnet,**
**dass** der Sand natürlich vorgefundener Sand ist.

43. Baustein nach Anspruch 42, **dadurch gekennzeichnet,**
**dass** der natürlich vorgefundene Sand nicht gereinigt und/oder nach Korngröße selektiert ist.

44. Baustein nach mindestens einem der Ansprüche 34 bis 43, **dadurch gekennzeichnet,**
**dass** der Sand Wüstensand ist.

45. Baustein nach mindestens einem der Ansprüche 34 bis 44, **dadurch gekennzeichnet,**
**dass** der Baustein weiterhin mindestens ein Bauteil umfasst.

46. Baustein nach Anspruch 45, **dadurch gekennzeichnet,**
**dass** das Bauteil ein Befestigungs- oder ein Stabilisierungselement ist.

47. Baustein nach Anspruch 46, **dadurch gekennzeichnet,**
**dass** das Befestigungselement ein Hacken, eine Öse oder ein Winkel und das Stabilisierungselement eine Armierung, eine Bewehrung oder eine Gitterstruktur ist.

48. Baustein nach mindestens einem der Ansprüche 34 bis 47, **dadurch gekennzeichnet,**
**dass** er weiterhin einen Farbstoff umfasst.

49. Baustein nach Anspruch 48, **dadurch gekennzeichnet,**
**dass** der Farbstoff ein anorganisches Pigment ist.

50. Baustein nach Anspruch 49, **dadurch gekennzeichnet,**
**dass** das anorganische Pigment Zinkweiß, Titanweiß, Ocker, Chromgelb oder Pflanzenschwarz oder eine Mischung daraus ist.

51. Verwendung des Bausteins nach mindestens einem der Ansprüche 34 bis 50 als Baukörper.

52. Verwendung des Bausteins nach Anspruch 51 zur Wärmedämmung.
